# EUROPÄISCHE PATENTSCHRIFT

(11) **EP 0 932 034 B1**
(45) Veröffentlichungstag und Bekanntmachung des Hinweises auf die Patenterteilung: **09.06.2004**
(21) Anmeldenummer: 98101342.8
(22) Anmeldetag: 27.01.1998
(51) Int. Cl.: G01M 3/18, G01M 3/00

(54) **Temperaturmess- und -überwachungsanordnung**
Temperature measuring and monitoring device
Dispositif de surveillance et de mesure de la température

(43) Veröffentlichungstag der Anmeldung: 28.07.1999
(73) Patentinhaber: Michael Hesky GmbH, 65606 Villmar (DE)
(72) Erfinder: Hesky, Michael, 65606 Villmar (DE)
(74) Vertreter: Blumbach, Kramer & Partner GbR

(56) Entgegenhaltungen:
- EP-A- 0 060 552
- EP-A- 0 073 322

## Beschreibung

Die Erfindung bezieht sich auf eine Temperaturmeßund -überwachungsanordnung, insbesondere zur Leckerfassung von Rohrleitungen.

Um Lecks in Rohrleitungen festzustellen, gibt es vielerlei Methoden, darunter solchen, die auf die Temperaturveränderung bei auftretenden Lecks basieren. Beispielsweise sind Sensoren hinsichtlich Temperatur, Feuchtigkeit und Radioaktivität zwischen Rohrleitungswand und Isolierung angeordnet und über optische Leiterbündel mit einer Analysestation verbunden (DE 30 49 544 A1). Um die Ausbreitung der Leckage zu analysieren, werden viele Sensoren und demgemäß viele optische Leiterbündel eingesetzt. Die Handhabung solcher optischen Leiterbündel im Erdreich ist problematisch.

Bei einem weiteren bekannten Verfahren und einer Vorrichtung zur Kontrolle und Überwachung des Zustandes von Rohren, Behältern, Pipelines oder dergleichen (DE 195 09 129 A1) werden lokale Temperaturschwankungen festgestellt, was die Feststellung der Umgebungstemperaturverteilung über Abschnitte des zu überwachenden Gegenstandes bedingt, wobei ein langgestreckter, verteilter Temperatursensor zur verteilten Temperaturmessung verwendet wird. Bei festgestellter örtlicher Anomalie in der Temperaturverteilung wird auf eine Leckage geschlossen. Zum Feststellen der Umgebungstemperaturverteilung wird ein faseroptisches, mit Laserlicht beaufschlagtes Sensorkabel verwendet, und es wird eine Laufzeit- und - intensitätsauswertung des rückgestreuten Laserlichts durchgeführt. Diese Art der Temperaturerfassung unterliegt Fehlerquellen, die sich mit der Zeit ändern, so daß eine sichere Auswertung über lange Zeiträume schwierig wird.

Der Erfindung liegt die Aufgabe zugrunde, eine Temperaturmeß- und -überwachungsanordnung, insbesondere zur Leckerfassung von Rohrleitungen, anzugeben, bei der Drifts der Temperaturmessung niedrig gehalten oder ausgeschlossen werden können.

Die gestellte Aufgabe wird aufgrund der Merkmale des Anspruchs 1 gelöst und durch die weiteren Merkmale der abhängigen Ansprüche ausgestaltet und weiterentwickelt.

Im einzelnen gibt es eine Anzahl von Temperatursensoren, die jeweils ein Meßglied und ein Referenzglied aufweisen. Das Meßglied ist als frequenzbestimmendes Glied in einem Meßoszillator einbezogen, der vom RC- oder LC-Typ ist, und das Referenzglied ist als frequenzbestimmendes Glied in einem gleichartigen RC- oder LC-Referenzoszillator einbezogen. Solche Oszillatoren weisen aktive Bauelemente auf, die auf einem gemeinsamen Träger untergebracht sind und aus gleichen oder ähnlich alterndem Material bestehen. Jedem Sensor ist eine Kommunikationseinheit zugeordnet, die Sende- und Empfangseinrichtungen aufweist, um beim Empfang einer zugeordneten Adresse anzusprechen, um den Temperatursensor abzufragen. Dabei wird die Oszillatorfrequenz des Referenzoszillators und des Meßoszillators an eine Auswerteschaltung gesendet, welche die Meßfrequenz zur Bestimmung der Temperatur am Meßglied auswertet. Es wird eine mathematische Funktion aus Meßfrequenz und Referenzfrequenz gebildet, um den jeweils vorläufig erhaltenen Temperaturwert zu korrigieren und Drifts der Temperaturmessung weitgehend auszuschließen.

Bei ausgedehnten Objekten, wie es Rohrleitungen und Rohrleitungssysteme sind, werden Gruppen von Temperatursensoren und zugeordnete Kommunikationseinheiten gebildet und über eine serielle Verbindungsleitung mit zwei oder drei Adern verbunden. Jeder Gruppe wird ein Gruppenrechner als Auswerteschaltung pro serielle Verbindungsleitung zugeordnet, und der Gruppenrechner steuert jeden Temperatursensor mit seiner ihm zugeteilten Adresse an und fragt ihn ab, um so erhaltene Temperaturwerte mit vorgegebenen Temperaturwerten zu vergleichen. Auf diese Weise werden Anomalien der Temperaturverteilung an dem zu überwachenden Objekt festgestellt.

Weitere Einzelheiten der Erfindung werden anhand der Zeichnung beschrieben. Dabei zeigt:
- Fig. 1: ein Temperaturmeß- und -überwachungssystem eines Rohrleitungsnetzes in schematischer Darstellung,
- Fig. 2: einen Rohrleitungsabschnitt mit Kommunikationseinheit und Temperatursensor, schematisch,
- Fig. 3: einen Schnitt durch den Rohrabschnitt der Fig. 2,
- Fig. 4: einen Schnitt durch vergrabene Rohrleitungen,
- Fig. 5: eine Kommunikationseinheit, schematisch, und
- Fig. 6: ein Blockschaltbild des Temperatursensors.

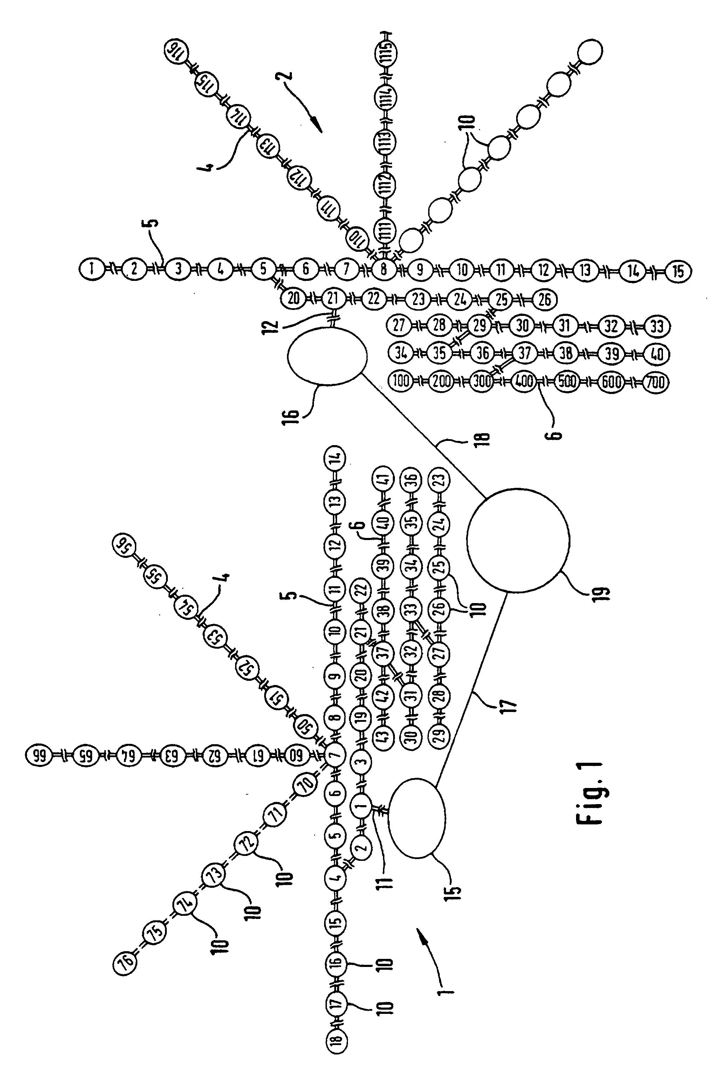

Mit Bezug auf Fig. 1 ist ein Rohrleitungssystem mit zwei Gruppen von Rohrleitungen 1 und 2 dargestellt, die einzelne Rohrleitungsstrecken 4, 5, 6 umfassen, die miteinander verbunden sein können und gemeinsam hinsichtlich Leckagen überwacht werden sollen. Zu diesem Zweck gibt es entlang jeder Rohrleitung 4, 5, 6 Temperatursensoren und zugeordnete Kommunikationseinheiten 10, die über eine serielle Verbindungsleitung 11 bzw. 12 mit einem zugeordneten Trassen- oder Gruppenrechner 15 bzw. 16 verbunden sind. Die Gruppenrechner 15, 16 stehen über geeignete Datenleitungen, beispielsweise Telefonleitungen 17, 18, mit einem Zentralrechner 19 in Verbindung. Die seriellen Verbindungsleitungen 11, 12 umfassen zwei oder drei Adern und sind entlang der jeweiligen Rohrleitungen 4, 5, 6 verlegt und zu dem jeweiligen Trassen- oder Gruppenrechner 15, 16 hingeführt.

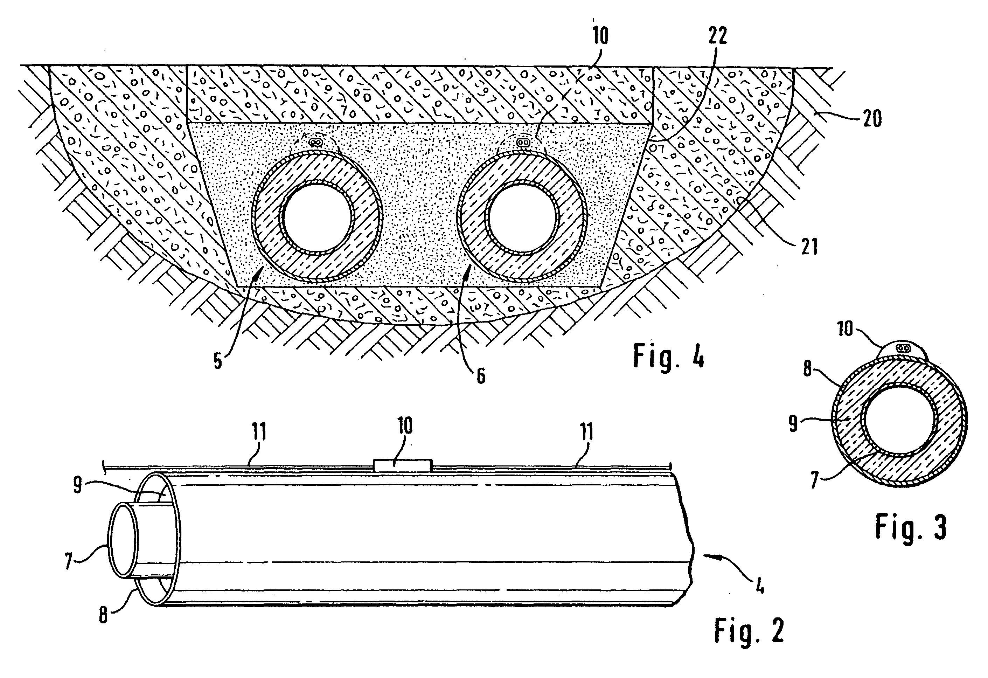

Fig. 2 zeigt ein Stück einer Rohrleitung 4, die ein Innenrohr 7, ein Außenrohr 8 und einen dazwischen liegenden Isoliermantel 9 umfaßt. Eine Kommunikationseinheit 10 sitzt auf dem Außenrohr 8 oder ist in dessen Nähe angeordnet. Die serielle Verbindungsleitung 11 führt zu weiteren Kommunikationseinheiten auf dem Rohr, wie in Fig. 1 angedeutet. Gewöhnlich treten Leckagen in der Nähe der Verbindungsstellen von Einzelrohren auf, weswegen die Kommunikationseinheit 10 in der Nähe einer Polyethylenmuffe (Fig. 3) angebracht wird.

Fig. 4 zeigt den Verlauf zweier paralleler Rohrleitungen 5, 6 im Erdreich 20. Normalerweise wird ein Graben 21 gezogen, in den die Leitungen 5, 6 verlegt werden und mit Sand oder dergleichen Verfüllmaterial 22 umhüllt werden. Die Kommunikationseinheit 10 wird an geschützter Stelle der Rohrleitung angebracht, beispielsweise am oberen Scheitelpunkt einer Muffe.

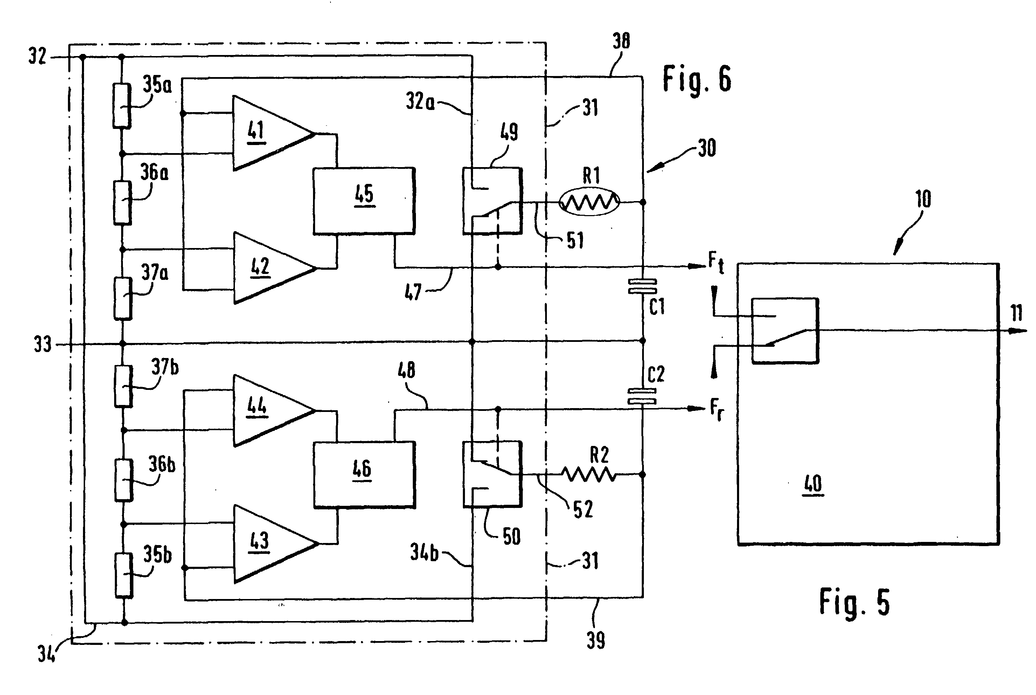

Eine Kommunikationseinheit 10 enthält einen Temperatursensor 30 (Fig. 6) und eine Adressierlogik 40 (Fig. 5), die beide über die serielle Verbindungsleitungn 11 oder 12 mit einem zugeordneten Rechner 15 oder 16 verbunden sind. Adressierlogiken sind an sich bekannt und bedürfen keiner näheren Erläuterung. Ihre Funktion besteht darin, auf der Leitung 11 ankommende Adressierdaten auszuwerten, d. h. anzusprechen oder nicht anzusprechen, und im Falle des Ansprechens Schaltvorgänge in dem Temperatursensor 30 zu bewirken, d. h. diesen an die Stromversorgung anzuschalten und die Frequenzsignale Fₜ, Fᵣ auf die Leitung 11 oder 12 zu schalten.

Fig. 6 zeigt einen Temperatursensor 30. Dieser besteht aus einem Chip 31 und zwei Widerständen R1 und R2 in Serie mit Kondensatoren C1 und C2. Versorgungsspannung Ub von beispielsweise 15 V wird an einer Leitung 32 zugeführt, und eine Leitung 33 dient zur Stromrückleitung. Die Leitung 32 weist innerhalb des Chips 31 eine Abzweigung 34 auf. Zwischen den Leitungen 32 bzw. 34 und 33 erstrecken sich zwei Spannungsteiler, gebildet durch Widerstände 35a, 36a, 37a bzw. 35b, 36b, 37b, so daß 2/3 Ub und 1/3 Ub an diesen Spannungsteilern abgegriffen werden können. Die abgegriffenen Spannungen werden einer Reihe von Komparatoren 41, 42, 43, 44 zugeführt, die jeweils zwei Eingänge haben, wobei die ersten Eingänge mit den bereits erwähnten Abgriffen der Spannungsteiler verbunden sind, während die zweiten Eingänge über Leitungen 38 bzw. 39 mit den Kondensatoren C1 bzw. C2 in Verbindung stehen. Die Komparatoren 41, 42 sind ausgangsseitig mit dem Eingang eines bistabilen Multivibrators 45 und die Komparatoren 43 und 44 mit einem bistabilen Multivibrator 46 verbunden. Die Multivibratoren 45 und 46 weisen jeweils eine Ausgangsleitung 47 bzw. 48 auf, die über die Adressierlogik 40 mit der seriellen Verbindungsleitung 11 verbindbar sind. Der Multivibrator 45 steuert einen elektronischen Schalter 49 und der Multivibrator 46 einen elektronischen Schalter 50, die jeweils als einpolige Umschalter ausgebildet sind. Die Anschlußleitungen des elektronischen Schalters 49 sind mit 32a, 33a und 51 bezeichnet, während die des elektronischen Schalters 50 mit 33b, 34b und 52 bezeichnet sind. Der Kondensator C1 ist über den Widerstand R1 und den Schalter 49 entweder mit Versorgungsspannung Ub verbunden und lädt sich auf, oder der Kondensator entlädt sich in der dargestellten Schalterstellung. Das gleiche gilt hinsichtlich des Kondensators C2, des Widerstands R2 und des Schalters 50. Wenn sich der Kondensator C1 lädt und 2/3 Ub Spannung erreicht, schaltet der Komparator 41 den Multivibrator 45 in den Zustand "low", woraufhin der elektronische Schalter 49 die dargestellte Stellung einnimmt, in welcher sich der Kondensator C1 über den Widerstand R1 entlädt. Wenn 1/3 Ub Spannung erreicht wird, spricht der Komparator 42 an und schaltet den Multivibrator auf "high", wodurch wiederum der elektronische Schalter 49 umgelegt wird und der Kondensator C1 über den Widerstand R1 und die Leitungen 51, 32a, 32 geladen wird. Wenn die Spannung am Kondensator C1 wiederum 2/3 Ub erreicht, wird dies am Komparacor 41 festgestellt, und der Multivibrator 45 geht wiederum in den Zustand "low". Dieses Spiel wiederholt sich ständig und erzeugt ein Frequenzsignal Fₜ auf der Leitung 47, das von dem augenblicklichen Widerstandswert des Widerstandes R1 abhängt. Je niedriger der Widerstand R1 ist, umso höher ist die Frequenz Fₜ.

Der Kondensator C2, der Widerstand R2, der Schalter 50, die Komparatoren 43, 44 und der bistabile Multivibrator 46 arbeiten in gleicher Weise zusammen, wie hinsichtlich der Bauteile C1, R1, 49, 41, 42, 45 beschrieben, so daß an der Ausgangsleitung 48 ebenfalls ein Frequenzsignal Fₜ abgegeben wird, welches kennzeichnend für den Widerstandswert des Widerstandes R2 ist. Der Widerstand R2 wird aus einem Metallschichtwiderstand mit möglichst kleinem Temperaturkoeffizienten hergestellt, so daß die an der Leitung 48 abgegriffene Frequenz Fᵣ ziemlich konstant bleibt und als Referenzfrequenz benutzt werden kann. Der Widerstand R1 ist ein temperaturabhängiger Widerstand und das Signal F_{c} eine temperaturabhängige Frequenz. Es gibt Widerstände mit positivem Temperaturkoeffizienten, beispielsweise ein Platinwiderstand oder ein Silicium-PTC-Widerstand, und es gibt Widerstände mit negativen Temperaturkoeffizienten, beispielsweise mit einem Heißleiter. Beide Arten von Widerständen sind geeignet. Der Temperatursensor 30 zeichnet sich dadurch aus, daß infolge der Versorgungsspannungsteilung mit den Spannungsteilern 35a, 36a, 37a bzw. 35b, 36b, 37b Schwankungen der Versorgungsspannung U_{b} keinen verfälschenden Einfluß auf die Temperaturermittlung haben, da solche Fehlerquellen sich aufheben bzw. aus Meßfrequenz und Referenzfrequenz kompensiert werden können.

Während ein RC-Glied in der Oszillatorschaltung als frequenzbestimmendes Glied benutzt worden ist, ist es auch möglich, ein LC-Glied in dem Oszillator als frequenzbestimmendes Glied zu verwenden. Darüber hinaus ist es auch möglich, ein Quarzkristall mit spezieller Schliffebene zu verwenden, bei dem der TK-Umkehrpunkt weit außerhalb des zu messenden Temperaturbereichs liegt. Der geschliffene Quarzkristall wird anstelle des RC- oder LC-Gliedes im jeweiligen Oszillator verwendet. Bei den beiden Oszillatoren wird die Temperatur/Frequenz-Kennlinie in unterschiedlichen linearen Bereichen gewählt. Es sei bemerkt, daß die Resonanzfrequenz des Quarzkristalls nur von seinen mechanischen Abmessungen abhängt. Diese Abmessungen ändern sich mit der Temperatur und damit andert sich auch die Resonanzfrequenz.

## Patentansprüche

1. Temperaturmeß- und -überwachungsanordnung, insbesondere zur Leckerfassung von Rohrleitungen, mit folgenden Merkmalen:
eine Anzahl von Temperatursensoren (30), die jeweils ein Meßglied (R1) und ein Referenzglied (R2) aufweisen;
das Meßglied (R1) ist als frequenzbestimmendes Glied in einem Meßoszillator (41, 42, 45, 49) und das Referenzglied (R2) als frequenzbestimmendes Glied in einem Referenzoszillator (43, 44, 46, 50) einbezogen;
der Meßoszillator und der Referenzoszillator weisen aktive Bauelemente auf, die auf einem gemeinsamen Träger (31) untergebracht sind und aus gleich oder ähnlich alterndem Material bestehen;
eine Anzahl von Kommunikationseinheiten (10), die jeweils einem Temperatursensor (30) zugeordnet sind und Sende- und Empfangseinrichtungen aufweisen, um beim Empfang einer zugeordneten Adresse anzusprechen und den Temperatursensor abzufragen, wobei der Referenzoszillator und der Meßoszillator an die Sendeeinrichtung geschaltet werden, um ihre jeweilige Oszillatorfrequenz (Fₜ, Fᵣ) an eine Auswerteschaltung (15, 16) zu senden;
die Auswerteschaltung (15, 16) wertet die Meßfrequenz (Fₜ) zur Bestimmung der Temperatur am Meßglied aus, wobei eine mathematische Funktion aus Meßfrequenz (Fₜ) und Referenzfrequenz (Fᵣ) gebildet wird, um den jeweils vorläufig erhaltenen Temperaturwert zu korrigieren und Drifts der Temperaturmessung weitgehend auszuschließen.

2. Temperaturmeßanordnung nach Anspruch 1, mit folgenden Merkmalen:
die Temperatursensoren und zugeordnete Kommunikationseinheiten (10) bilden Gruppen an einem zu überwachenden Objekt (4, 5, 6);
eine serielle Verbindungsleitung (11; 12) mit zwei oder drei Adern pro Gruppe der Temperatursensoren (30) und zugeordneten Kommunikationseinheiten (10);
ein Gruppenrechner als Auswerteschaltung (15; 16) pro serielle Verbindungsleitung (11; 12), der jeden Temperatursensor (30) infolge seiner ihm zugeteilten Adresse ansteuern und abfragen kann sowie erhaltene Temperaturwerte mit vorgegebenen Temperaturwerten veraleichen kann, um Normalität oder Außergewöhnlichkeit des betreffenden Meßwertes festzustellen.

3. Temperaturmeßanordnung nach Anspruch 2,
**dadurch gekennzeichnet, daß** die vorgegebenen Temperaturwerte aus Durchschnittswerten von Messungen über alle Temperatursensoren der Gruppe gebildet werden, um witterungsbedingte Temperaturschwankungen in der Meßumgebung des Objekts zu berücksichtigen.

4. Temperaturmeßanordnung nach Anspruch 2 oder 3,
**dadurch gekennzeichnet, daß** zwei oder mehrere Gruppenrechner (15; 16) an einen Zentralrechner (19) angeschlossen sind, der die Meßdaten der Gruppenrechner auswertet und speichert.

5. Temperaturmeßanordnung nach einem der Ansprüche 1 bis 4,
**dadurch gekennzeichnet, daß** die Temperatursensoren (30) an oder in der Nähe des Außenrohres (8) von Rohrleitungen (4) als dem zu überwachenden Objekt angebracht sind, um die Temperatur an ausgewählten Stellen dieses Außenrohres zu überwachen.

6. Temperaturmeßanordnung nach Anspruch 5,
**dadurch gekennzeichnet, daß** als ausgewählte Stellen des Außenrohres (8) die Verbindungsmuffen zwischen Rohrleitungsstücken gewählt werden.

7. Temperaturmeßanordnung nach einem der Ansprüche 1 bis 6,
**dadurch gekennzeichnet, daß** der gemeinsame Träger (31) ein IC-Chip ist.

8. Temperaturmeßanordnung nach Anspruch 7,
**dadurch gekennzeichnet, daß** als Meßglied (R1) ein Platinwiderstand geschaltet ist.

9. Temperaturmeßanordnung nach Anspruch 7,
**dadurch gekennzeichnet, daß** als Meßglied (R1) ein Silicium-Bauteil mit positivem Temperaturkoeffizienten geschaltet ist.

10. Temperaturmeßanordnung nach Anspruch 7,
**dadurch gekennzeichnet, daß** als Meßglied (R1) ein Siliciumbauteil mit negativem Temperaturkoeffizienten geschaltet ist.

11. Temperaturmeßanordnung nach Anspruch 7,
**dadurch gekennzeichnet, daß** je ein geschliffener Quarzkristall in den Oszillatoren anstelle eines RCoder LC-Gliedes angeordnet ist, wobei die Schliffebene des Quarzkristalles so gelegt ist, daß der Umkehrpunkt weit außerhalb des zu messenden Temperaturbereichs liegt.

12. Temperaturmeßanordnung nach einem der Ansprüche 1-11,
**dadurch gekennzeichnet, daß** Meßoszillator und Referenzoszillator jeweils einen Spannungsteiler (35a, 36a, 37a; 35b, 36b, 37b) aufweisen, über die den Oszillatoren Versorgungsspannung (U_{b}) in gleichen Verhältnissen (1/3 U_{b}; 2/3 U_{b}) zugeführt wird.

## Claims

1. A temperature measuring and monitoring arrangement comprising
a number of temperature sensors (30), each having a measuring member (R1) and a reference member (R2);
said measuring member (R1) being in the form of a frequency-determining member in a measuring oscillator
(41,, 42, 45, 49) and the reference member (R2) being included in the form of a frequency-determining member in a reference oscillator (43, 44, 46, 50);
said measuring oscillator and said reference oscillator having active components which are disposed on a common carrier (31) and which comprise a material that ages in the same or a similar manner;
a number of communication units (10), each being associated with a respective temperature sensor (30) and having transmitting and receiving devices so as to respond upon receiving an associated address and to interrogate said temperature sensor, said reference oscillator and said measuring oscillator being connected to said transmitting device so as to send the respective oscillator frequency (Fₜ, Fᵣ) thereof to an evaluation unit (15, 16); and
said evaluation circuit (15, 16) evaluating the measuring frequency (Fₜ) to determine the temperature at the measuring member, wherein a mathematical function is formed from said measuring frequency (Fₜ) and said reference frequency (Fᵣ) in order to correct the respectively provisionally obtained temperature value and to substantially eliminate drifts in the temperature measurement.

2. The temperature measuring arrangement according to claim 1 wherein
the temperature sensors and associated communication units (10) form groups on an item (4, 5, 6) to be monitored;
a serial connecting line (11; 12) with two or three wires per group of the temperature sensors (30) and associated communication units (10) is provided; and
being connected through a serial connecting line having at least two wires to said evaluation unit;
a group computer as the evaluation circuit (15; 16) for each serial connecting line (11; 12) is provided which is adapted to actuate and interrogate each temperature sensor (30) due to its address allocated thereto and is adapted to compare acquired temperature values to predetermined temperature values in order to detect normality or unusualness of the measurement value in question.

3. The temperature measuring arrangement according to claim 2 **characterised in that** the predetermined temperature values are formed from average values of measurements over all temperature sensors of the group in order to take account of climatically induced fluctuations in temperature in the measurement environment of the item.

4. The temperature measuring arrangement according to claim 2 or claim 3 **characterised in that** two or more group computers (15; 16) are connected to a central computer (15) which evaluates and stores the measurement data from the group computers.

5. The temperature measuring arrangement according to one of claim 1 through 4 **characterised in that** the temperature sensors (30) are disposed at or in the proximity of the outer pipe (8) of pipeline (4) as the item to be monitored, in order to monitor the temperature at selected locations on the outer pipe.

6. The temperature measuring arrangement according to claim 5 **characterised in that** the connecting sockets between pipeline portions are the selected locations on the outer pipe (8).

7. The temperature measuring arrangement according to one of claims 1 through 6 **characterised in that** the common carrier (31) is an IC-chip.

8. The temperature measuring arrangement according to claim 7 **characterised in that** a platinum resistor is connected as the measuring member (R1).

9. The temperature measuring arrangement according to claim 7 **characterised in that** a silicon component with a positive temperature coefficient is connected as the measuring member (R1).

10. The temperature measuring arrangement according to claim 7 **characterised in that** a silicon component with a negative temperature coefficient is connected as the measuring member (R1).

11. The temperature measuring arrangement according to claim 7 **characterised in that** a respective ground quartz crystal is arranged in the oscillators instead of an RC-or LC-member, wherein the ground plane of the quartz crystal is so disposed that the reversal point is far outside the temperature range to be measured.

12. The temperature measuring arrangement according to one of claims 1 through 11 **characterised in that** the measuring oscillator and the reference .oscillator each have a respective voltage divider (35a, 36a, 37a; 35b, 36b, 37b) by way of which supply voltage (Ub) is fed to the oscillators in equal ratios (1/3 Ub; 2/3 Ub).

## Revendications

1. Dispositif de mesure et de surveillance de la température, notamment pour la détection de fuites dans des conduites, possédant les caractéristiques suivantes :
plusieurs capteurs de température (30) qui possèdent chacun un élément de mesure (R1) et un élément de référence (R2) ;
l'élément de mesure (R1) est intégré comme élément déterminant la fréquence à un oscillateur de mesure (41, 42,
45, 49) et l'élément de référence (R2) comme élément déterminant la fréquence à un oscillateur de référence (43, 44, 46, 50) ;
l'oscillateur de mesure et l'oscillateur de référence possèdent des composants actifs implantés sur un support commun (31) et sont composés de matériaux ayant le même comportement au vieillissement ou un comportement similaire ;
plusieurs unités de communication (10) qui sont respectivement associées à un capteur de température (30) et qui possèdent des dispositifs d'émission et de réception pour réagir à la réception d'une adresse associée et interroger le capteur de température de sorte que l'oscillateur de référence et l'oscillateur de mesure sont connectés au dispositif d'émission pour émettre leur fréquence d'oscillateur respective (Fₜ, Fᵣ) vers un circuit d'analyse (15, 16) ;
le circuit d'analyse (15, 16) analyse la fréquence de mesure (Fₜ) pour déterminer la température sur l'élément de mesure en tenant compte d'une fonction mathématique de la fréquence de mesure (Fₜ) et de la fréquence de référence (Fᵣ) pour corriger la température reçue provisoire respective et exclure l'essentiel de la dérive des mesures de température.

2. Dispositif de mesure de la température selon la revendication 1, possédant les caractéristiques suivantes :
les capteurs de température et les unités de communication (10) associées forment des groupes sur un objet à surveiller (4, 5, 6) ;
un câble de liaison série (11 ; 12) avec deux ou trois conducteurs par groupe de capteurs de température (30) et d'unités de communication associées (10) ;
un calculateur de groupe comme circuit d'analyse (15 ; 16) pour chaque câble de liaison série (11 ; 12), ledit calculateur pouvant exciter et interroger chaque capteur de température (30) à l'aide de l'adresse qui lui a été affectée et pouvant comparer les températures reçues à des températures prédéfinies afin de déterminer si la température concernée est normale ou anormale

3. Dispositif de mesure de la température selon la revendication 2, **caractérisé par le fait que** les températures prédéfinies sont calculées par moyenne des mesures de tous les capteurs de température du groupe pour prendre en compte des variations de température dues aux conditions ambiantes dans le voisinage de mesure de l'objet.

4. Dispositif de mesure de la température selon la revendication 2 ou 3, **caractérisé par le fait que** deux ou plusieurs calculateurs de groupe (15 ; 16) sont connectés à un calculateur central (19) qui analyse les mesures des calculateurs de groupe et les enregistre.

5. Dispositif de mesure de la température selon l'une des revendications 1 à 4, **caractérisé par le fait que** les capteurs de température (30) sont installés sur ou à proximité du tuyau extérieur (8) de conduites (4) constituant l'objet à surveiller, afin de surveiller la température à des emplacements choisis de ce tuyau extérieur.

6. Dispositif de mesure de la température selon la revendication 5, **caractérisé par le fait que** les emplacements choisis du tuyau extérieur (8) sont constitués par les raccords entre des tronçons de conduite.

7. Dispositif de mesure de la température selon l'une des revendications 1 à 6, **caractérisé par le fait que** le support commun (31) est une puce à circuit intégré.

8. Dispositif de mesure de la température selon la revendication 7, **caractérisé par le fait que** l'élément de mesure (R1) est une résistance en platine.

9. Dispositif de mesure de la température selon la revendication 7, **caractérisé par le fait que** l'élément de mesure (R1) est un composant en silicium avec coefficient de température positif.

10. Dispositif de mesure de la température selon la revendication 7, **caractérisé par le fait que** l'élément de mesure (R1) est un composant en silicium avec coefficient de température négatif.

11. Dispositif de mesure de la température selon la revendication 7, **caractérisé par le fait que** respectivement un cristal de quartz poli est intégré aux oscillateurs à la place d'un élément RC ou LC, le niveau dé polissage du quartz étant positionné de sorte que le point d'inversion se trouve notablement à l'extérieur de la plage de températures à mesurer.

12. Dispositif de mesure de la température selon l'une des revendications 1 à 11, **caractérisé par le fait que** l'oscillateur de mesure et l'oscillateur de référence présentent respectivement un diviseur de tension (35a, 36a, 37a ; 35b, 36b, 37b) par l'intermédiaire desquels une tension d'alimentation (U_{b}) est appliquée aux oscillateurs selon des proportions identiques (1/3 U_{b} ; 2/3 U_{b}).
